# DEMANDE DE BREVET EUROPEEN

(11) **EP 2 159 746 A1**
(43) Date de publication de la demande: **03.03.2010**
(21) Numéro de dépôt: 09168675.8
(22) Date de dépôt: 26.08.2009
(51) Int. Cl.: G06Q 10/00, H04L 12/58, H04M 1/725

(54) **Procédé et système de gestion automatique de notifications de formats hétérogènes**

(30) Priorité: 29.08.2008 FR 0804777
(71) Demandeur: Alcatel Lucent, 75008 Paris (FR)
(72) Inventeur: Dupont, Marie-Pascale, 91620, NOZAY (FR); Betge-Brezetz, Stéphane, 91620, NOZAY (FR); Kamga, Guy-Bertrand, 91620, NOZAY (FR); Piekarec, Sophie, 91620, NOZAY (FR); Vergnol, Arnaud, 92707, COLOMBES (FR)
(74) Mandataire: Hédarchet, Stéphane

(57) **Abrégé**

Procédé de gestion automatique de notifications utilisateur de formats hétérogènes dans un terminal mobile (10) apte à recevoir ou générer, et afficher ces notifications, procédé comprenant les étapes suivantes :
- traduire chaque notification reçue ou générée par ledit terminal mobile sous forme d'une métadonnée dans un format unique,
- enregistrer ladite traduction dans une base de données (2),
- évaluer la priorité de ladite notification en fonction d'une combinaison des critères de priorités prédéfinis par l'utilisateur,
- réorganiser la base de données (2) contenant ladite notification, en fonction de la priorité de celle-ci par rapport aux autres notifications traduites déjà mémorisées,
- afficher sur le terminal (10) la notification en fonction de sa priorité.

## Description

La présente invention se rapporte au domaine technique des télécommunications. Elle a pour objet un procédé ainsi qu'un système de gestion automatique des notifications reçues par un terminal mobile.

Elle concerne plus particulièrement les notifications utilisateur émises par les différents services et les différentes applications destinées à l'utilisateur d'un terminal mobile. A titre d'exemple non limitatif, on peut citer les notifications notamment sous forme de messages courts SMS (Short Message Service) ou MMS (Multimédia Message Service), ou encore les notifications émises par une application interne au terminal mobile et configurée pour l'envoi et/ou la réception de courrier électronique), avertissant l'utilisateur de l'arrivée d'un nouveau message textuel ou vocal, d'un appel manqué, d'une note d'agenda, d'une note d'information ou d'alerte à partir d'un réseau local, de la confirmation/demande d'une certaine opération (recharger un compte, s'abonner à un service), etc.

Ces notifications peuvent être de type interactif, requérant l'envoi de certaines informations, ou encore de type informatif (par exemple sous forme d'une alerte ou d'un rappel pour effectuer une certaine opération). En outre, elles sont généralement de nature volatile et, pour l'utilisateur d'un terminal mobile, peuvent être de niveaux d'importance et d'urgence différents.

Toutefois, les techniques utilisées à l'heure actuelle présentent comme inconvénient de ne supporter aucune gestion automatique des notifications de types différents. Ainsi, dans le cas d'une réception simultanée de plusieurs notifications, l'utilisateur du terminal mobile est contraint de consulter successivement toutes les notifications, dont il ne connaît pas a priori le degré de priorité, lequel ne peut en effet être évalué qu'après la visualisation du contenu de la notification. Ceci peut demander beaucoup de temps et retarder la prise de décision. De plus, l'utilisateur doit pouvoir accéder de manière fiable aux notifications. À défaut, il risque par mégarde d'en écraser ou d'en perdre une ou plusieurs, reçues simultanément.

On connaît peu de procédés et de systèmes conçus pour assurer la gestion des notifications utilisateur. Ces systèmes sont d'ailleurs très spécifiques. Ils s'intéressent principalement à quelques alertes particulières sans permettre une prise en charge unifiée des différents types de notifications.

Le document US 6 396 513, par exemple, décrit un système de tri des courriels entrants en fonction de critères préétablis par l'utilisateur de la boîte.

La solution Visual Voice Mail, récemment introduite par Verizon Wireless et éditée par Alcatel-Lucent et Comverse, est dédiée à la gestion des messages vocaux. Elle permet d'afficher la liste des messages vocaux reçus par un terminal mobile dans une interface graphique interactive sans aucune configuration préalable des règles de priorités.

Le document US 7 359 936 décrit un système d'agent de courriel qui permet de catégoriser les courriels entrants dans une boîte. Cette catégorisation agit sur un aperçu du courriel entrant, qui comprend des identifiants de base du courriel (émetteur, date, objet, taille, etc.) et un ensemble de mots-clés obtenus suite à dépouillement textuel du contenu du courriel. Cette dernière fonction peut être mise en oeuvre à l'aide des produits du commerce, tel que *Intelligent Miner for Text*, édité par IBM Corporation. En résultat de la catégorisation, un système d'interface graphique permet de présenter les items suivant des options prédéfinies par l'utilisateur de la boîte.

Il a été constaté que les notifications destinées aux terminaux mobiles sont de plus en plus fréquentes. En outre, elles parviennent au terminal via une gamme hétérogène de canaux et de services : service de messagerie téléphonique (SMS/MMS : notification publicitaire, notification de service, notification de l'opérateur téléphonique, etc.), service de géolocalisation, service de messagerie électronique, service intégré au terminal mobile (agenda, rappel, etc.), service de notification supporté par un WLAN (Wireless Local Area Network) d'un environnement particulier (WLAN d'hôpital : alertes aux personnels médicaux ; WLAN d'un service de transport : notifications aux voyageurs ; WLAN d'un centre commercial : notifications aux clients, etc.).

Les systèmes et procédés connus sont imparfaits, notamment en raison de l'absence d'une gestion globale de l'ensemble des notifications reçues par le terminal mobile permettant à l'utilisateur d'homogénéiser puis d'organiser intelligemment ces notifications suivant des critères d'importance et d'urgence éventuellement personnalisables.

Un objet de la présente invention est de remédier aux inconvénients précités. En particulier, l'invention vise à proposer un procédé et un système universel de gestion (notamment réception, sauvegarde, consultation) des notifications utilisateur reçues par un terminal mobile, peu important leur source ou leur provenance.

À cet effet, l'invention propose, suivant un premier aspect, un procédé de gestion automatique de notifications utilisateur de formats hétérogènes dans un terminal mobile apte à recevoir ou générer, et afficher ces notifications, procédé qui comprend les étapes suivantes :
- traduire chaque notification reçue ou générée par le terminal mobile en un format unique de métadonnées,
- enregistrer ladite traduction dans une base de données,
- évaluer la priorité de ladite notification en fonction de critères de priorités prédéfinis par l'utilisateur,
- réorganiser la base de données contenant ladite notification, en fonction de la priorité de celle-ci par rapport aux autres notifications traduites déjà mémorisées,
- afficher sur le terminal la notification en fonction de sa priorité.

L'invention propose, selon un deuxième aspect, un système de gestion de notifications utilisateur de formats hétérogènes dans un terminal mobile apte à recevoir ou générer ces notifications utilisateur, ce système comprenant :
- un module de réception des notifications, apte à traduire chaque notification reçue ou générée par ledit terminal mobile sous forme d'une métadonnée dans un format unique,
- une base de données pour la sauvegarde des traductions,
- un module d'évaluation de la priorité de chaque notification en fonction de critères de priorités prédéfinis par l'utilisateur,
- un module d'organisation de la base de données en fonction des priorités respectives des notifications qui y sont mémorisées,
- un module graphique interactif d'affichage des notifications en fonction de leurs priorités.

L'invention permet une gestion intelligente et automatique des notifications reçues sur un terminal mobile, indépendamment de la source et du format des notifications. Elle permet notamment de mieux définir les priorités de chaque notification par rapport aux autres en utilisant des critères définis par l'utilisateur du terminal mobile. A titre d'exemple non limitatif, les critères de priorité peuvent être sélectionnés parmi : l'importance, la source, l'urgence, la durée de vie, la fréquence d'apparition, le contenu de la notification, etc.

En outre, l'invention permet une conjugaison intelligente des règles et du profil de l'utilisateur du terminal mobile pour le calcul des priorités des notifications.

L'invention trouve notamment son application dans les environnements où l'utilisateur du terminal mobile est très sollicité par l'intermédiaire de celui-ci.

D'autres caractéristiques et avantages de l'invention apparaîtront plus clairement et de manière complète à la lecture de la description ci-après d'une variante préférée de mise en oeuvre du procédé et de réalisation du système, laquelle est faite en référence aux dessins annexés dans lesquels :
- La figure 1 illustre schématiquement le contexte d'application de la présente invention,
- La figure 2 est un diagramme illustrant les différentes étapes du procédé suivant l'invention tout en montrant les relations entre les différents modules du système.

Dans la présente description du procédé et du système de gestion automatique des notifications utilisateur, on part de l'hypothèse qu'un terminal mobile 10 réceptionne simultanément plusieurs notifications 21, 31, et 41 émises par différentes sources 20, 30 et 40. A titre d'exemple non limitatif, ces notifications peuvent être une notification d'appel, une notification de courrier électronique, une notification d'agenda, etc. Ces notifications peuvent être (et sont généralement) de formats hétérogènes.

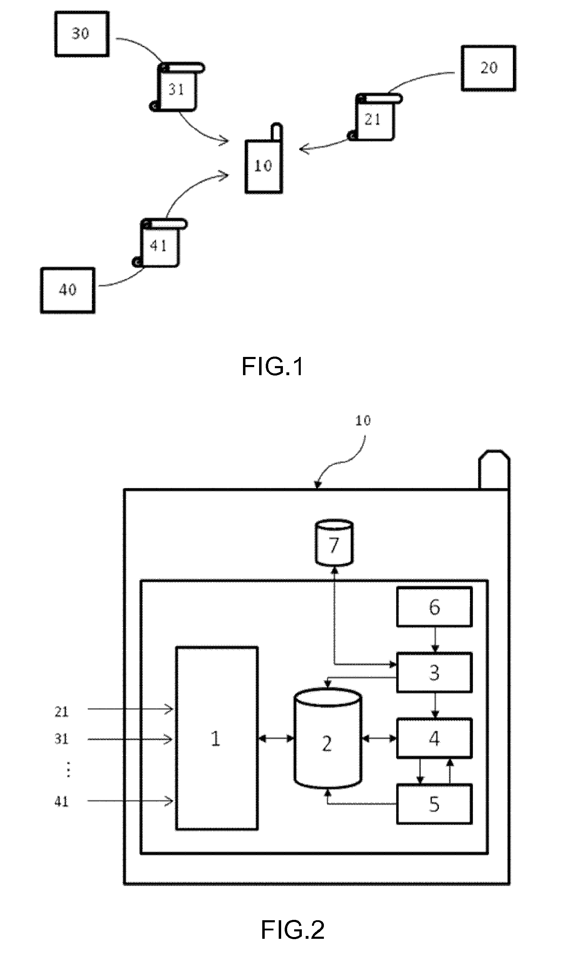

La gestion automatique des notifications est assurée par des modules fonctionnels qui, dans l'exemple non limitatif illustré sur la figure 2, sont embarqués dans le terminal mobile 10. Une implémentation de certains de ces modules au moins pourrait être réalisée au niveau des émetteurs 20, 30 et 40.

Ces modules comprennent :
- Un module 1 de réception des notifications utilisateur émises par les différentes sources 20, 30, 40. A titre d'exemple, l'utilisation de serveurs mandataires (ou proxy) permet de réaliser une interface avec différents types de plateformes et d'applications émettrices. Le module 1 a également pour fonction d'homogénéiser le format des différentes notifications utilisateur dans le but d'un traitement commun ultérieur, les notifications utilisateur étant traduites en un format interne unique de métadonnées, compréhensible par les autres modules décrits ci-après. La traduction d'une notification utilisateur comprend les opérations suivantes :
   - identifier des informations relatives au service source de ladite notification,
   - identifier des champs au sein de ladite notification,
   - identifier des caractéristiques descriptives de la notification,
   - compléter la métadonnée correspondant à ladite notification au moyen des informations relatives au service source, des champs identifiés, et des caractéristiques descriptives.
- Une base de données 2 servant de support de centralisation des notifications qui lui sont relayées par le module 1 de réception. Cette base de données 2 rassemble les nouvelles notifications utilisateur 21, 31 et 41 reçues, ainsi que l'historique des notifications accompagnées des détails les concernant, tels que : niveaux de priorité, émetteurs, durées de vie, dates de réception, etc.
- Un module 3 de gestion des priorités, configuré pour appliquer des critères de priorité aux métadonnées relatives aux notifications utilisateur centralisées dans la base de données 2. On suppose, par convention, que ces critères sont dépendants du temps (critère d'urgence). Le module 3 procède par conséquent à une réévaluation régulière des niveaux de priorité des notifications, la gestion des notifications étant ainsi mise à jour continuellement.
- Un module 4 configuré pour assurer la mise en ordre des métadonnées relatives aux notifications utilisateur sur la base du résultat obtenu par le module 3 de gestion des priorités. Le module 4 effectue l'arrangement des métadonnées relatives aux notifications utilisateur de manière continue et à la même fréquence que la gestion des priorités par le module 3 correspondant, ce qui permet de provoquer le déclenchement dans le temps des rappels correspondants à des notifications assorties d'un délai.
- Un module 5 de gestion de l'affichage, configuré pour commander l'affichage des notifications utilisateur déclenchées par le module 4. le module 5 contrôle une interface utilisateur interactive, qui permet à ce dernier de modifier ou de rentrer des données. L'interface sert aussi à l'affichage de l'historique des notifications dans l'ordre défini par le module 4 ou dans tout autre ordre choisi par l'utilisateur du terminal mobile. A titre d'exemple, l'utilisateur peut afficher des notifications classées suivant leur date de réception, leur émetteur, etc.
- Un module 6 de configuration avancée du gestionnaire des priorités 3. Ce module 6 est muni d'une interface graphique (GUI, Graphical User Interface) qui permet à l'utilisateur du terminal mobile de rentrer ou de modifier des critères de priorité utilisés par la suite par le module 3 de gestion des priorités.

Le gestionnaire 3 des priorités peut également être paramétré en tenant compte de critères personnels, implémentés au sein d'une base de données 7 de profils, tel que le profil de l'utilisateur, qu'il est avantageusement possible de modifier ou même de supprimer. En outre, plusieurs profils utilisateurs peuvent être implémentés au sein de la base de données 7.

De préférence, le module 6 est en outre configuré pour :
- définir plusieurs niveaux de priorité. Ainsi, le critère d'urgence peut comprendre trois niveaux temporels, tels que : immédiat ; avant une heure donnée ; avant une date donnée. De la même manière, le critère d'urgence peut comprendre trois niveaux d'importance, tels que ; crucial ; important ; informatif.
- prendre en compte des mots-clés (pouvant être enrichis grâce à un dictionnaire de synonymes), à rechercher dans le contenu des notifications utilisateur,
- sélectionner des règles de priorité portant sur les identifiants et les caractéristiques des notifications utilisateur. Ainsi, ces règles peuvent par exemple porter sur la taille de la notification, sa date de réception, ses annexes, la plateforme émettrice, l'identité de l'émetteur, l'objet, etc.

De préférence, l'utilisateur doit aussi pouvoir modifier directement la priorité d'une notification en utilisant l'interface du gestionnaire des priorités 5.

En particulier, l'utilisateur du terminal mobile doit pouvoir personnaliser les critères de priorité des notifications même si ces dernières sont déjà munies de leurs propres niveaux de priorité.

Le gestionnaire 3 des priorités identifie les critères de priorité tels que définis dans le module 6 de configuration et le profil utilisateur sélectionné dans la base de données 7. Ensuite, il calcule les niveaux de priorité des nouvelles notifications stockées dans la base de données 2. Les notifications sont alors classées par ordre de priorité à l'aide du module 4, qui utilise les résultats du calcul effectué par le gestionnaire 3 des priorités. Une réorganisation du contenu de 2 est aussi possible à l'aide du module 5 de gestion de l'affichage.

Comme évoqué ci-dessus, les notifications utilisateurs peuvent provenir de serveurs externes configurés pour communiquer avec le terminal mobile 10, ou être générées en interne par celui-ci.

Par ailleurs, les notifications peuvent être assorties de niveaux de priorité prédéfinis ou non, avec ou sans délais. Ces niveaux de priorité peuvent être personnalisés en correspondance avec un profil de l'utilisateur et des critères de priorités pouvant être configurés à l'aide du module 6 de configuration avancée.

De préférence, le format interne des métadonnées est extensible à toute autre nouvelle information disponible concernant une notification utilisateur.

Une gestion automatique des notifications utilisateur, par exemple 21, 31, et 41, dans un terminal mobile 10 apte à recevoir ou générer, et afficher lesdites notifications, comprend au moins les étapes suivantes :
- traduire chaque notification reçue ou générée par le terminal mobile en un format unique de métadonnées,
- enregistrer ladite traduction dans une base de données 2,
- évaluer la priorité de ladite notification en fonction de critères de priorités prédéfinis par l'utilisateur,
- réorganiser la base de données 2 contenant ladite notification, en fonction de la priorité de celle-ci par rapport aux autres notifications traduites déjà mémorisées,
- afficher sur le terminal la notification en fonction de sa priorité.

La réorganisation de la base de données comprend la comparaison de la priorité de la notification avec celles des autres notifications provenant :
- du même service que celui de cette notification ;
- ou d'un autre service que celui de cette notification.

L'exemple 1 ci-après illustre une notification de type alerte. L'exemple 2 illustre quant à lui la traduction possible de cette notification dans un format de métadonnées pouvant être employé pour l'enregistrement des traductions.

### Exemple 1:

```
 <Alert>
    <Sender> Patient Monitoring System </Sender>
    <Type> Abnormal situation</Type>
    <ActivityDomain> Health </ActivityDomain>
    <Msg> Fall Detection in Room 21, Emergency Department </Msg>
    <Time> 12:32 </Time>
    <ThirdParty> Bob Smith </ThirdParty>
    <Priority> High </Priority>
    <AckRequired> Yes </AckRequired>
    <AckTimeout> 20 </AckTimeout>
    <TimeToLive> 60 </TimeToLive>
 </Alert>
```

### Exemple 2:

```
 <NotifEvent>
    <Sender> Patient Monitoring System </Sender>
    <Type> Abnormal situation </Type>
    <ActivityDomain> Health </ActivityDomain>
    <Content>
        <Title> </Title>
        <Msg> Fall Detection in Room 21 </Msg>
        <Morelnfo></MoreInfo>
        <Keywords> Emergency, Fall </Keywords>
        <Attachments> </Attachments>
    </Content>
    < ThirdParty> Bob Smith</ThirdParty>
    <Priority> 8 </Priority>
    <ReceptionTime> 12:32:50 </ReceptionTime>
    <AckRequired> Yes </AckRequired>
    <AckTimeout> 20 </AckTimeout>
    <NbRepetition> 2 </NbRepetition>
    <TimeToLive> 60 </TimeToLive>
    <Status> Not Treated </Status>
    <Additionallnfo> </AdditionalInfo>
 </NotifEvent>
```

Supposons que les niveaux des priorités s'échelonnent de 1 (basse priorité) à 10 (priorité la plus haute). Un calcul fonctionnel, non limitatif et en référence aux deux exemples précités, de la priorité de valeur 8 prend en compte au moins :
- la priorité de l'alerte entrante, ici high ;
- l'émetteur, ici Patient Monitoring System ;
- la situation anormale de type médicale
- la demande d'un accusé de réception;
- des mots-clés, ici Emergency, Fall;
- le nombre de fois de réception de l'alerte sans qu'elle ne soit consultée.

## Revendications

1. Procédé de gestion automatique de notifications utilisateur de formats hétérogènes dans un terminal mobile (10) apte à recevoir ou générer, et afficher ces notifications, procédé **caractérisé en ce qu'**il comprend les étapes suivantes :
- traduire chaque notification reçue ou générée par ledit terminal mobile sous forme d'une métadonnée dans un format unique,
- enregistrer ladite traduction dans une base de données (2),
- évaluer la priorité de ladite notification en fonction d'une combinaison des critères de priorités prédéfinis par l'utilisateur et du contenu de la notification,
- réorganiser la base de données (2) contenant ladite notification, en fonction de la priorité de celle-ci par rapport aux autres notifications traduites déjà mémorisées,
- afficher sur le terminal (10) la notification en fonction de sa priorité.

2. Procédé selon la revendication 1, dans lequel les critères de priorité sont fonction d'au moins un profil d'un utilisateur du terminal mobile.

3. Procédé selon la revendication 1 ou 2, dans lequel l'étape de traduction de la notification comprend les opérations suivantes :
- identifier des informations relatives au service source de ladite notification,
- identifier des champs au sein de ladite notification,
- identifier des caractéristiques descriptives de la notification,
- compléter la métadonnée correspondant à ladite notification au moyen des informations relatives au service source, des champs identifiés, et des caractéristiques descriptives.

4. Procédé selon la revendication 3, dans lequel les critères de priorité liés à une notification sont fonction des informations relatives au service source, des champs, des caractéristiques descriptives de la notification.

5. Procédé selon l'une quelconque des revendications 1 à 4, dans lequel l'évaluation de la priorité de la notification comprend une opération de recherche de mots clés, parmi une liste prédéfinie, dans le contenu et les éventuelles pièces jointes de la notification.

6. Procédé selon la revendication 5, dans lequel ladite recherche est élargie au moyen de synonymes des mots-clés, identifiés dans un dictionnaire des synonymes, d'abréviations, de chiffres.

7. Procédé selon l'une des revendications 1 à 6, dans lequel l'étape de réorganisation de la base de données comprend la comparaison de la priorité de la notification avec celles des autres notifications provenant du même service que celui de cette notification.

8. Procédé selon la revendication 5, dans lequel l'étape de réorganisation de la base de données comprend la comparaison de la priorité de la notification avec celles des autres notifications provenant d'un autre service que celui de cette notification.

9. Système de gestion de notifications utilisateur de formats hétérogènes dans un terminal mobile apte à recevoir ou générer, et afficher ces notifications, **caractérisé en ce qu'**il comprend :
- un module de réception des notifications (1), apte à traduire chaque notification reçue ou générée par ledit terminal mobile sous forme d'une métadonnée dans un format unique,
- une base de données (2) pour la sauvegarde des traductions,
- un module (3) d'évaluation de la priorité (3) de chaque notification en fonction de critères de priorités prédéfinis par l'utilisateur et du contenu de la notification,
- un module (4) d'organisation de la base de données (2) en fonction des priorités respectives des notifications qui y sont mémorisées,
- un module (5) graphique interactif (5) d'affichage des notifications en fonction de leurs priorités.

10. Système selon la revendication 9, qui comprend en outre un module de configuration des critères de priorité des notifications utilisateur.
